# EUROPÄISCHE PATENTSCHRIFT

(11) **EP 3 220 002 B1**
(45) Veröffentlichungstag und Bekanntmachung des Hinweises auf die Patenterteilung: **31.07.2019**
(21) Anmeldenummer: 17151100.9
(22) Anmeldetag: 12.01.2017
(51) Int. Cl.: F16F 9/04, B29D 22/02

(54) **VORRICHTUNG ZUM BÖRDELN**
FLANGING DEVICE
DISPOSITIF DE SERTISSAGE

(30) Priorität: 24.02.2016 DE 102016202820
(43) Veröffentlichungstag der Anmeldung: 20.09.2017
(73) Patentinhaber: ContiTech Luftfedersysteme GmbH, 30165 Hannover (DE)
(72) Erfinder: Morig, Gerd, 30926 Seelze (DE); Reisch, Winfried, 31515 Wunstorf (DE); Radke, Ronald, 30823 Garbsen (DE); Porro-Martinez, Gustavo, 30890 Barsinghausen (DE)
(74) Vertreter: Finger, Karsten

(56) Entgegenhaltungen:
- EP-A1- 1 304 202
- EP-A2- 2 415 589
- DE-B- 1 071 325

## Beschreibung

Die Erfindung betrifft eine Vorrichtung zum Verbördeln von Bördelplatten an einen Luftfederbalg.

Luftfedern, beispielsweise für die Anwendung als Hubzylinder oder Maschinenlagerung in der Industrie weisen meist einen Luftfederbalg auf, der in axialer Richtung endseitig je einen Wulst aufweist. Zur Komplettierung wird der Luftfederbalg mit zwei metallenen Klemmplatten, sogenannten Bördelplatten luftdicht verschlossen.

Die Bördelplatten weisen einen Boden auf, an dem gegebenenfalls Befestigungselemente oder ein Luftanschluss angeordnet sind. Der Boden geht an den Rändern über einen Radius in eine senkrecht zum Boden stehende Zarge über, so das Bördelplatten im unverbördelten Zustand prinzipiell einem flachen Blechnapf ähneln.

Der Radius am Rande des Bodens und der Durchmesser der Zarge sind dem jeweiligen Wulst des Luftfederbalges angepasst, so dass die Bördelplatte leicht über den Wulst des Luftfederbalg stülpbar ist.

Die Bördelplatte wird dann zusammen mit dem Balg in eine entsprechende Vorrichtung mit einem Formwerkzeug, bestehend aus einer Druckplatte und einem Formring und einer Pressvorrichtung, zum Beispiel einer hydraulischen Presse passgenau eingesetzt und axial zusammengepresst, wobei die senkrechte Zarge über die Kontur des Formrings axial und radial gestaucht wird und dadurch um den Wulst des Luftfederbalges herum plastisch verformt wird. Dabei wird der Wulst fest in der nun umgebördelten Zarge eingepresst, sodass eine luftdichte Verbindung zwischen der Bördelplatte und dem Luftfederbalg entsteht. Eine Vorrichtung dieser Art ist zum Beispiel in der DE 1071325 offenbart.

Nachteilig bei dieser Vorrichtung ist, dass nach jedem Bördelvorgang das Werkstück, nämlich der Verbund aus Luftfederbalg und einer ersten verbördelten Bördelplatte aus der Vorrichtung entnommen, umgedreht und wieder passgenau in die Vorrichtung eingesetzt werden muss, was nicht nur unergonomisch ist, sondern auch Zeit kostet. Gegebenenfalls muss das Formwerkzeug außerdem zum zweiten Bördelvorgang noch umgerüstet werden. Darüber hinaus kann es dabei zu Fluchtungsfehlern oder Abweichungen von der Parallelität der Bördelplatten kommen.

Der Erfindung liegt die Aufgabe zu Grunde, eine eingangs geschilderte Vorrichtung derart zu verändern, dass
- die Orientierung der Metallteile zueinander verbessert wird,
- die Bedienbarkeit im Herstellerprozess erleichtert wird und
- weniger Arbeitsgänge erforderlich sind.

Diese Aufgabe wird dadurch gelöst, dass die Vorrichtung zwei gegenüberliegende Formwerkzeuge aus je einer Druckplatte und je einem Formring aufweist, die gemeinsam in einer Pressvorrichtung angeordnet und derart axial beabstandet sind, dass ein Luftfederbalg, zu jedem Formwerkzeug passgenau, zwischen die Formwerkzeuge in die Vorrichtung einlegbar ist.

Diese Anordnung hat den Vorteil, dass beide Bördelungen in einem Arbeitsgang ausführbar sind.

In einer Weiterbildung der Erfindung weist die Vorrichtung zwei Halterungen auf, durch die die jeweilige Bördelplatte in ihrer Position in der Vorrichtung arretierbar ist.

Dies hat den Vorteil, dass bei der Beschickung der Vorrichtung nicht drei Teile gleichzeitig, nämlich 2 Bördelplatten und ein Luftfederbalg, in der Vorrichtung platziert werden müssen, was der Ergonomie zugute kommt.

In einer Weiterbildung der Erfindung sind die Formwerkzeuge derart axial voneinander beanstandet, dass der Luftfederbalg mit bereits auf die bewulsteten Enden des Balges aufgesetzten und fixierten Bördelplatten passgenau zu jedem Formwerkzeug in die Vorrichtung einlegbar ist.

Diese Anordnung hat den Vorteil, dass die Luftfedern bereits vor dem Einlegen komplettiert werden können und keine Halterungen für die Bördelplatten in der Vorrichtung vorgehen gesehen werden müssen.

In einer Weiterbildung der Erfindung weist die Vorrichtung Führungselemente auf, mittels derer die Formwerkzeuge beim Bördelvorgang gegeneinander führbar sind.

Diese Anordnung hat den Vorteil, dass Ungenauigkeiten der Pressvorrichtung auf das Ergebnis des Bördelprozesses nur sehr geringen oder keinen Einfluss haben.

In einer Weiterbildung der Erfindung sind die Formwerkzeuge als Bestandteil der Pressvorrichtung ausgebildet.

Diese Anordnung hat den Vorteil, dass die erfindungsgemäße Vorrichtung auch bei kleineren Bauräumen der Pressvorrichtung nutzbar ist, da Führungen und insbesondere die Druckplatten der Formwerkzeuge integraler Bestandteil der Pressvorrichtung sind und daher keinen zusätzlichen Bauraum beanspruchen.

In einer Weiterbildung der Erfindung weist die Vorrichtung eine waagerechte Wirkrichtung auf.

Die waagerechte Anordnung hat den Vorteil, dass insbesondere bei großen Luftfedern das Einlegen der Teile in die Vorrichtung erleichtert ist.

In einer Weiterbildung der Erfindung weist die Vorrichtung eine senkrechte Wirkrichtung auf.

Die senkrechte Anordnung hat den Vorteil, dass sie in beliebige, handelsübliche Pressen einbaubar ist.

Anhand der Zeichnung wird nachstehend ein Ausführungsbeispiel der Erfindung näher erläutert.

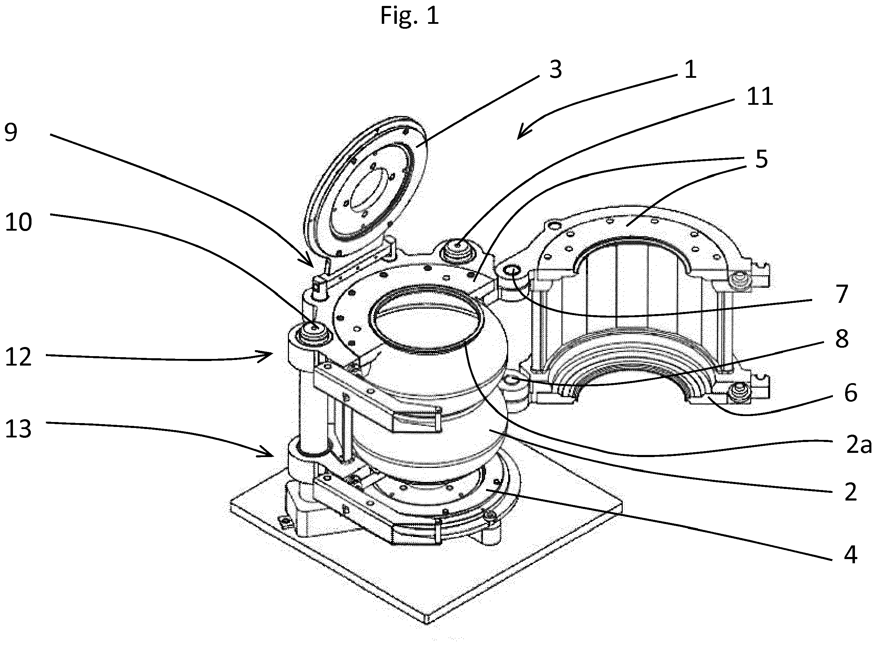

Die Figur 1 zeigt eine erfindungsgemäße Vorrichtung 1 in einer perspektivischen Darstellung mit bereits eingelegtem Luftfederbalg 2 und mit je einem endseitigen Wulst, von dem hier nur ein Wulst 2A sichtbar ist. Die Vorrichtung 1 weist 2 Formwerkzeuge auf, die jeweils aus einer Druckplatte 3, 4 und einem Formring 5, 6 gebildet sind. Zur besseren Einlegbarkeit des Balges 2 sind die Formringe 5 und 6 geteilt und über Drehgelenke 7, 8 zu geschlossenen Ringen verschließbar.

In dieser Darstellung nicht gezeigte Bördelplatten sind in die Druckplatte 3, 4 einlegbar, wobei die Bördelplatte in der Druckplatte 4 durch Schwerkraft, die Bördelplatte in der Druckplatte 3 beispielsweise mittels Magnetkraft fixierbar ist. Die Druckplatte 3 ist aufklappbar und durch ein Drehlager 9 zusammen mit der dann eingelegten Bördelplatte auf den vorher zu schließenden Formring 5 herunterklappbar.

Die Vorrichtung 1 weist weiterhin zwei Führungssäulen 10 und 11 auf, längs derer der obere Teil 12 der Vorrichtung mit Druckplatte 3, Bördelplatte und Formring 5 gegen den unteren Teil 13 der Vorrichtung 1 mit Druckplatte 4, Bördelplatte und Formring 6 axial bewegbar ist.

Die geschlossene Vorrichtung 1 ist in einer hier nicht gezeigten Pressvorrichtung, beispielsweise eine hydraulische Presse einbaubar und in dieser axial zusammenpressbar. Bei diesem Vorgang greift der sich plastisch längs einer vorgegebenen Kontur der Formringe 5, 6 verformende Rand jeder Bördelplatte um den entsprechenden Wulst des Balges 2 herum, wobei der Balg 2 luftdicht mit den Bördelplatten verbindbar ist. Der eigentliche Bördelvorgang ist nach dem Stand der Technik bekannt und deshalb hier nicht näher beschrieben.

Mit der gezeigten Vorrichtung 1 sind pro Arbeitsgang jeweils zwei Bördelvorgänge möglich, wodurch einerseits die Ergonomie deutlich verbessert ist, andererseits Zwischenschritte wie das Entnehmen und Umdrehen überflüssig.

### Bezugszeichenliste

- 1: Vorrichtung
- 2: Luftfederbalg, Balg
- 2a: Wulste des Balges 2
- 3, 4: Druckplatten
- 5, 6: Formringe
- 7, 8: Drehgelenke
- 9: Drehlager der Druckplatte 3
- 10, 11: Führungssäulen
- 12: oberer Teil der Vorrichtung 1
- 13: unterer Teil der Vorrichtung 1

## Patentansprüche

1. Vorrichtung (1) zum
Verbördeln von Bördelplatten an einen Luftfederbalg (2, 2a), **dadurch gekennzeichnet, dass** die Vorrichtung (1) zwei gegenüberliegende Formwerkzeuge (3, 4, 5, 6) aus je einer Druckplatte (3, 4) und je einem Formring (5, 6) aufweist, die gemeinsam in einer Pressvorrichtung angeordnet und derart axial beabstandet sind, dass ein Luftfederbalg (2, 2a), zu jedem Formwerkzeug (3, 4, 5, 6) passgenau zwischen die Formwerkzeuge (3, 4, 5, 6) in die Vorrichtung (1) einlegbar ist.

2. Vorrichtung (1) nach Anspruch 1, **dadurch gekennzeichnet, dass** die Vorrichtung (1) zwei Halterungen aufweist, durch die die jeweilige Bördelplatte in ihrer Position in der Vorrichtung (1) arretierbar ist.

3. Vorrichtung nach Anspruch 1, **dadurch gekennzeichnet, dass** die Formwerkzeuge (3, 4, 5, 6) derart axial voneinander beanstandet sind, dass der Luftfederbalg (2, 2a) mit bereits auf die bewulsteten Enden des Balges (2, 2a) aufgesetzten und fixierten Bördelplatten passgenau zu jedem Formwerkzeug (3, 4, 5, 6) in die Vorrichtung (1) einlegbar ist.

4. Vorrichtung nach Anspruch 1, 2 oder 3, **dadurch gekennzeichnet, dass** die Vorrichtung (1) Führungselemente (10, 11) aufweist, mittels derer die Formwerkzeuge (3, 4, 5, 6) beim Bördelvorgang gegeneinander führbar sind.

5. Vorrichtung nach Anspruch 1, 2 oder 3, **dadurch gekennzeichnet, dass** die Formwerkzeuge (3, 4, 5, 6) als Bestandteil der Pressvorrichtung ausgebildet sind.

6. Vorrichtung nach mindestens einem der vorhergehenden Ansprüche, **dadurch gekennzeichnet, dass** die Vorrichtung (1) eine waagerechte Wirkrichtung aufweist.

7. Vorrichtung nach einem der Ansprüche 1 -5, **dadurch gekennzeichnet, dass** die Vorrichtung (1) eine senkrechte Wirkrichtung aufweist.

## Claims

1. Device (1) for crimping crimped plates onto an air spring bellows (2, 2a), **characterized in that** the device (1) has two opposite forming tools (3, 4, 5, 6) each made of a pressure plate (3, 4) and a forming ring (5, 6), which are jointly arranged in a pressing device and are axially spaced apart such that an air spring bellows (2, 2a) is able to be inserted into the device (1) between the forming tools (3, 4, 5, 6) with a precise fit with respect to each forming tool (3, 4, 5, 6).

2. Device (1) according to Claim 1, **characterized in that** the device (1) has two holders, with which each crimped plate is able to be locked in its position in the device (1).

3. Device according to Claim 1, **characterized in that** the forming tools (3, 4, 5, 6) are axially spaced apart from one another such that the air spring bellows (2, 2a) is able to be inserted into the device (1) with a precise fit with respect to each forming tool (3, 4, 5, 6) with crimped plates already placed on and fixed to the beaded ends of the bellows (2, 2a).

4. Device according to Claim 1, 2 or 3, **characterized in that** the device (1) has guide elements (10, 11), by means of which the forming tools (3, 4, 5, 6) are able to be guided towards one another during the crimping operation.

5. Device according to Claim 1, 2 or 3, **characterized in that** the forming tools (3, 4, 5, 6) are configured as constituent parts of the pressing device.

6. Device according to at least one of the preceding claims, **characterized in that** the device (1) has a horizontal effective direction.

7. Device according to one of Claims 1 to 5, **characterized in that** the device (1) has a vertical effective direction.

## Revendications

1. Dispositif (1) pour le sertissage de plaques de bordage au niveau d'un soufflet de ressort pneumatique (2, 2a), **caractérisé en ce que** le dispositif (1) présente deux outil de formage (3, 4, 5, 6) opposés constitués chacun d'une plaque de pression (3, 4) et d'une bague de formage (5, 6), qui sont disposées ensemble dans un dispositif de presse et qui sont espacées axialement de telle sorte qu'un soufflet de ressort pneumatique (2, 2a) puisse être inséré dans le dispositif (1) entre les outils de formage (3, 4, 5, 6) de manière ajustée exactement à chaque outil de formage (3, 4, 5, 6).

2. Dispositif (1) selon la revendication 1, **caractérisé en ce que** le dispositif (1) présente deux fixations par le biais desquelles la plaque de sertissage respective peut être bloquée dans sa position dans le dispositif (1).

3. Dispositif selon la revendication 1, **caractérisé en ce que** les outils de formage (3, 4, 5, 6) sont espacés l'un de l'autre axialement de telle sorte que le soufflet de ressort pneumatique (2, 2a) puisse être inséré dans le dispositif (1) avec les plaques de sertissage déjà posées et fixées sur les extrémités du soufflet (2, 2a) pourvues de bourrelets, de manière ajustée exactement à chaque outil de formage (3, 4, 5, 6).

4. Dispositif selon la revendication 1, 2 ou 3, **caractérisé en ce que** le dispositif (1) présente des éléments de guidage (10, 11) au moyen desquels les outils de formage (3, 4, 5, 6) peuvent être guidés l'un contre l'autre lors de l'opération de bordage.

5. Dispositif selon la revendication 1, 2 ou 3, **caractérisé en ce que** les outils de formage (3, 4, 5, 6) sont réalisés sous forme de constituants du dispositif de presse.

6. Dispositif selon au moins l'une quelconque des revendications précédentes, **caractérisé en ce que** le dispositif (1) présente une direction d'action horizontale.

7. Dispositif selon l'une quelconque des revendications 1 à 5, **caractérisé en ce que** le dispositif (1) présente une direction d'action verticale.
